# EUROPÄISCHE PATENTANMELDUNG

(11) **EP 1 111 767 A2**
(43) Veröffentlichungstag der Anmeldung: **27.06.2001**
(21) Anmeldenummer: 00127462.0
(22) Anmeldetag: 14.12.2000
(51) Int. Cl.: H02P 9/04

(54) **Antriebsaggregat**

(30) Priorität: 22.12.1999 DE 19962181
(71) Anmelder: SIEMENS AKTIENGESELLSCHAFT, 80333 München (DE)
(72) Erfinder: Dehlwes, Heiko, Dipl.-Ing., 91058 Erlangen (DE)

(57) **Zusammenfassung**

Ein Antriebsaggregat mit wenigstens einer Verbrennungskraftmaschine, die mechanisch über wenigstens eine Kupplung mit wenigstens einer Arbeitsmaschine gekoppelt ist, ist dadurch, daß die Kupplung als elektromagnetische Schlupfkupplung ausgebildet ist, konstruktiv einfacher aufgebaut und weist einen verbesserten Wirkungsgrad bei der Energieübertragung zwischen Verbrennungskraftmaschine und Arbeitsmaschine auf.

## Beschreibung

Die Erfindung betrifft ein Antriebsaggregat mit wenigstens einer Verbrennungskraftmaschine, die mechanisch über wenigstens eine Kupplung mit wenigstens einer Arbeitsmaschine gekoppelt ist.

Bei derartigen Antriebsaggregaten, die in stationären Anlagen und mobilen Anlagen (z. B. Lokomotiven, Schiffe) eingesetzt werden, treibt die Verbrennungskraftmaschine (z. B. ein Dieselmotor) die Arbeitsmaschine (z. B. einen Generator) an. Die Verbrennungskraftmaschine ist damit der Energieerzeuger für den Energieverbraucher Arbeitsmaschine. Im Rahmen der Erfindung kann die Arbeitsmaschine zum Antrieb von Hilfsanlagen dienen, die die Anlage selber zum Betrieb benötigt (z. B. Dieselkühlerlüfter) und/oder zum Antrieb anderer Aggregate z. B. Hilfsbetriebe anderer Maschinen (z. B. Fahrmotorlüfter) oder zum Antrieb von Produktions- oder Fördermaschinen (z. B. Kompressorantriebe).

Die einfachste Art der Kraftübertragung zwischen Verbrennungskraftmaschine und Arbeitsmaschine ist ein direkter mechanischer Antrieb. Der Nachteil dieser Lösung ist, daß die Drehzahl der Arbeitsmaschine fest mit der Drehzahl der Verbrennungskraftmaschine gekoppelt ist. Hierbei ist unerheblich, ob die Kraftübertragung nur mittels einer Welle erfolgt, oder ob ein mechanischer Drehzahlwandler (Getriebe) zwischengeschaltet ist.

Verbrennungskraftmaschinen weisen aber zwischen Leerlauf und Vollast üblicherweise einen Drehzahlbereich von ca. 1:3 auf. Der Antrieb der Arbeitsmaschine kann damit in der Regel nicht ohne Nachteile über eine direkte mechanische Kupplung mit der Verbrennungskraftmaschine erfolgen. Eine Auslegung der Arbeitsmaschine für den Leerlauf würde eine größere Dimensionierung der Arbeitsmaschine erfordern, mit der Folge, daß diese zum einen größer, schwerer und teurer würde und zum anderen bei Vollast weit überdimensioniert wäre. Die Überdimensionierung der Arbeitsmaschine bedeutet bei Betrieb oberhalb der Bemessungsdrehzahl einen Betrieb über den eigentlichen Bedarf und hätte einen negativen Einfluß auf die Lebensdauer der Arbeitsmaschine sowie der von ihr angetriebenen Komponenten. Weiterhin hat dies einen negativen Einfluß auf den Energieverbrauch und damit den Gesamtwirkungsgrad des Antriebsaggregats. Weiterhin wäre eine unnötig starke Lärmentwicklung, z. B. bei Lüftern, eine mögliche Folge.

Zur Vermeidung der vorstehenden Probleme, werden Arbeitsmaschinen unabhängig von der Drehzahl der Verbrennungskraftmaschinen betrieben. Die hierfür notwendige Drehzahlregelung geschieht üblicherweise hydraulisch (hydrostatisch oder hydrodynamisch) oder elektrisch. In beiden Fällen werden die Drehzahlen der Arbeitsmaschine im einfachsten Fall auf einem konstanten Wert gehalten oder - wenn nötig - bedarfsabhängig stufenlos oder in Stufen, z. B. durch Polumschaltung, geregelt. Die hydraulischen und elektrischen Drehzahlanpassungen erfordern aber die Umwandlung der von der Verbrennungskraftmaschine bereitgestellten mechanischen Energie in hydraulische bzw. elektrische Energie, welche nach Regelung meistens wieder in mechanische Energie zurückgewandelt werden muß. Diese Energieumwandlungen verteuern und komplizieren nicht nur derartige Antriebsaggregate, sondern verschlechtern auch den Wirkungsgrad der Leistungsübertragung.

Weiterhin ist es bekannt, die Kraft zwischen der Verbrennungskraftmaschine und der Arbeitsmaschine unter Zuhilfenahme eines mechanisches Regelgetriebes alleine oder in Kombination mit anderen Übertragungsprinzipien zu übertragen. Auch diese Lösung ist entsprechend aufwendig.

Aufgabe der vorliegenden Erfindung ist es deshalb, ein Antriebsaggregat der eingangs genannten Art zu schaffen, das einfacher aufgebaut ist und einen verbesserten Wirkungsgrad bei der Energieübertragung zwischen Verbrennungskraftmaschine und Arbeitsmaschine aufweist.

Die Aufgabe wird erfindungsgemäß durch die Merkmale im Anspruch 1 gelöst.

Das Antriebsaggregat nach Anspruch 1 weist wenigstens eine Verbrennungskraftmaschine auf, die mechanisch über wenigstens eine Kupplung mit wenigstens einer Arbeitsmaschine gekoppelt ist. Erfindungsgemäß ist die Kupplung als elektromagnetische Schlupfkupplung ausgebildet.

Durch die Verwendung einer elektromagnetischen Schlupfkupplung bei dem Antriebsaggregat nach Anspruch 1 kann der Einfluß des großen Drehzahlbereiches der Verbrennungskraftmaschine (bei einem Dieselmotor ca. 1:3) auf die Arbeitsmaschine stark eingeschränkt werden (beispielsweise auf 2:3, also auf 1:1,5).

Bei dem erfindungsgemäßen Antriebsaggregat wird durch die elektromagnetische Schlupfkupplung die Arbeitsmaschine auf einfache Weise bis auf einen zulässigen Bereich von der Drehzahl der Verbrennungskraftmaschine entkoppelt.

Die erfindungsgemäße Lösung nutzt die Vorteile der einfachen mechanischen Kraftübertragung und vermeidet deren Nachteile, indem die Arbeitsmaschine bei Erreichen bestimmter Drehzahlen von der Kraftmaschine so entkoppelt wird, daß weitere Erhöhungen der Drehzahlen nicht weitergegeben werden.

Die Drehzahl, auf die die elektromagnetische Schlupfkupplung die Drehzahl der Arbeitsmaschine begrenzt, wird über das Lastmoment der Arbeitsmaschine definiert. Die Last der Arbeitsmaschine muß also von der Drehzahl der Arbeitsmaschine in definierter Abhängigkeit stehen, denn die elektromagnetische Schlupfkupplung kippt bei einem konstruktiv voreingestellten Lastmoment. Diese Abhängigkeit ist z. B. bei Strömungsarbeitsmaschinen, wie Lüfter/Ventilatoren, Pumpen, etc., generell gegeben.

Die elektromagnetische Schlupfkupplung ist gemäß einer vorteilhaften Ausgestaltung nach Anspruch 2 permanentmagnetisch erregt. Auch diese Kupplung ist zwischen der direkt von der Verbrennungskraftmaschine angetriebenen Welle und der Welle der anzutreibenden Arbeitsmaschine angeordnet. Die permanent erregte Schlupfkupplung wird hierbei so ausgelegt, daß diese bei einer bestimmten Drehzahl der Verbrennungskraftmaschine kippt und so weitere Drehzahlerhöhungen der Verbrennungskraftmaschine von der Arbeitsmaschine durch Schlupferhöhung fernhält. Auf diese Weise können im Extremfall die Arbeitsmaschinen sogar mit einer konstanten Drehzahl über den ganzen Drehzahlbereich der Verbrennungskraftmaschine betrieben werden. Voraussetzung hierfür ist, daß die elektromagnetische Schlupfkupplung und die Arbeitsmaschine entsprechend bemessen sind.

Für Anwendungsfälle in der Praxis dürfte aber eine Reduzierung des Einflusses der Drehzahl der Verbrennungskraftmaschine auf 1:2 oder 1:1,5 schon ausreichend sein. Möglicherweise ist eine gewisse Drehzahlvarianz sogar wünschenswert. So wird es z. B. bei Diesellokomotiven von den Fahrgästen im Bahnsteigbereich sicher als angenehm empfunden, wenn die Lüftergeräusche bei niedrigeren Drehzahlen des Dieselmotors ebenfalls etwas abnehmen und damit akustisch nicht in den Vordergrund treten.

Durch die Erfindung kann nunmehr auf elektrische, hydraulische oder mechanische Regeleinrichtungen verzichtet werden.

Beispielsweise kann bei Diesellokomotiven mit hydrostatischen Hilfsbetrieben die elektromagnetische Schlupfkupplung das hydrostatische System, bestehend aus Pumpe, Hydro-Motor und Regeleinrichtung, ersetzen.

Im Fall der elektrischen Regelung wird beilspielsweise der Hilsfbetriebestrang, bestehend aus Elektromotor und Hilfsgeneratorsatz und der evtl. noch nachgeschaltete Bordnetzumformer, bzw. bei Energieversorgung über den Gleichstromzwischenkreis des Leistungskreises der statische Bordnetzumformer ersetzt.

Auch in Fällen, bei denen auf hydraulische bzw. elektrische Systeme, wegen der Versorgung anderer Verbraucher (z. B. Kompressor, Zugenergieversorgung) nicht ganz verzichtet werden kann, besteht die Möglichkeit die hydraulischen bzw. elektrischen Systeme entsprechend kleiner und damit kostengünstiger zu dimensionieren. Dort wo die elektromagnetische Schlupfkupplung die hydraulische bzw. elektrische Kraftübertragung ersetzt, entfällt zumindest der hydraulische bzw. der elektrische Motor.

Die am Beispiel für Hilfsanlagen auf Diesellokomotiven gemachten Ausführungen gelten selbstverständlich auch für Hauptanlagen.

Durch den Wegfall der beschriebenen hydraulischen bzw. elektrischen Regeleinrichtungen und die Geräte für die dazu nötigen Energieumwandlungen erhält man durch das erfindungsmäßige Antriebsaggregat ein Anbtriebssystem mit einer geringeren Komplexität, wodurch eine höhere Zuverlässigkeit und auch ein höherer Wirkungsgrad des Gesamtsystems erreicht wird.

## Patentansprüche

1. Antriebsaggregat mit wenigstens einer Verbrennungskraftmaschine, die mechanisch über wenigstens eine Kupplung mit wenigstens einer Arbeitsmaschine gekoppelt ist,
**dadurch gekennzeichnet,**
daß die Kupplung als elektromagnetische Schlupfkupplung ausgebildet ist.

2. Antriebsaggregat nach Anspruch 1,
**dadurch gekennzeichnet,**
daß die elektromagnetische Schlupfkupplung als permanentmagnetisch erregte Schlupfkupplung ausgebildet ist.
